(19)

Europäisches
Patentamt
European
Patent Office
Office européen
des brevets

(11) **EP 0 923 352 B1**

(12) **EUROPEAN PATENT SPECIFICATION**

(45) Date of publication and mention
of the grant of the patent:
**28.02.2007  Bulletin 2007/09**

(51) Int Cl.:
*A61C 8/00* (2006.01)

(21) Application number: **98915577.5**

(22) Date of filing: **13.04.1998**

(86) International application number:
**PCT/US1998/007526**

(87) International publication number:
**WO 1998/046163 (22.10.1998 Gazette 1998/42)**

(54) **DENTAL IMPLANT SYSTEM HAVING IMPROVED STABILITY**

ZAHNIMPLANTAT MIT VERBESSERTER STABILITÄT

SYSTEME D'IMPLANT DENTAIRE A STABILITE AMELIOREE

(84) Designated Contracting States:
**AT BE CH DE ES FR GB IT LI NL SE**

(30) Priority: **17.04.1997  US 43106 P**
**17.09.1997  US 59307 P**

(43) Date of publication of application:
**23.06.1999  Bulletin 1999/25**

(73) Proprietor: **IMPLANT INNOVATIONS, INC.**
**Palm Beach Gardens,**
**Florida 33410 (US)**

(72) Inventor: **LAZZARA, Richard, J.**
**Lake Worth, FL 33460 (US)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A- 5 482 463        US-A- 5 711 669**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

This invention relates to the field of dental implants, more particularly, to the components used in dental implant systems and, most particularly, to the screws which are used to assemble such systems.

Dental implants are the subject of many patents and extensive literature. Artificial roots are implanted in the jawbones of patients and used to support replacement teeth. The tooth may be fastened directly to the root or it may be fastened to an intermediate part, called an abutment. In most systems, small screws are used to connect the parts. The screws which are used to connect the abutment to the implanted root typically have minor diameters of about 1.4-1.5mm (0.055-0.059 inch). Retaining screws, which hold the tooth to the abutment part, may have minor diameters of about 1.06-1.15 mm (0.0419-0.0453 inch). Such screws are made of various metals and alloys, particularly, palladium, titanium and gold alloys, which are biocompatible and have become accepted for dental use, (see for example US,5,482,463).

It will be apparent that when such implanted artificial teeth are used to chew food (mastication), they are subject to significant forces. These forces place loads on the screws holding the tooth and any abutment to the implanted root. While those screws are intended to prevent the components of the implant system from separating, the mastication loads may cause the contacting surfaces of the components to open slightly on one side of the implant system by bending one or more of the screws. This creates what will be referred to herein as a "microgap," which typically occurs at the interface between the opposed surfaces of the abutment and the implanted root. Oral fluids may gain access to the interior of the implant system through the microgap, risking infection. Movement of the implant components may also cause the screws to loosen or fail as they are repeatedly stretched and bent. Avoiding the forces on the implant system is not within the control of the implant designer or the dentist who installs the implant. What they can do, however, is pretension the screws to attempt to prevent the forces encountered during use from causing separation of the individual components of the implant system.

As a screw is fully threaded into a prethreaded bore, the screw is tensioned between the engaging threaded surfaces of the screw and the bore, and the abutting surfaces of the screw head and the stationary seating surface around the bore. After the screw head seats on a stationary surface, the tension on the screw increases as the screw is threaded farther into the bore. This tension on the screw produces a force that is commonly referred to as the "preload" of the screw.

Classical screw theory relates the degree (angle) of turn of a screw to preload or clamping force by the following simplified equation:

$$\mathbf{F} = (\mathbf{P}\,\theta/360)\mathbf{K}$$

where:

$\mathbf{F}$ = preload or clamped force of the two parts held together by the screw (e.g., the abutment to the implant),
$\mathbf{P}$ = pitch of the abutment screw (e.g., 0.4 mm for a typical abutment screw),
$\theta$ = degree (angle) of turn measured after snugging of screw head against opposed surface (i.e., abutment/implant surfaces are seated together), and
$\mathbf{K}$ = spring constant of the screw and joint.

If the degree of turn ($\theta$) is increased, the resulting clamping force ($\mathbf{F}$) is also increased. An increase in the clamping force results in a tighter abutment/implant joint. The tighter joint imparts greater resistance to screw loosening and increases the load required to pry the abutment/implant joint apart. Side loads produced during mastication result in forces that tend to pry the abutment/implant joint apart. Joint prying and fatigue strength are directly related and, thus, the greater the force required to pry the joint, the greater the force required to cause cyclic fatigue failure of the screw.

In general, the fatigue strength of the screw increases as the preload increases because the screw remains more stable when subjected to various loads. The farther a screw is threaded into its bore after seating of the screw head, the greater the preload on the screw, i.e., the greater the force exerted by the inherent resilience (elastic recovery) of the screw itself on the opposing surfaces responsible for the tension on the screw. Advancing movement of the screw into its bore is resisted in part by the friction between the rotating surfaces of the screw and the opposed stationary surfaces, which must be overcome by the applied torque to advance the screw. By reducing the friction between the rotating surfaces of the screw and the opposed stationary surfaces, the preload on the screw can be increased for any applied torque because that torque will cause the screw to be advanced farther into its bore.

## SUMMARY OF THE INVENTION

The primary object of the present invention is to provide an improved way to increase the preload on the screw and thereby improve the stability of the dental implant assembly and the prosthesis mounted thereon.

In accordance with the present invention, the foregoing objective is realized by providing an improved dental implant system comprising an artificial root, an abutment, and a gold-plated screw, preferably a palladium alloy screw, fastening the abutment to the artificial root. The gold plating on the screw has been found to permit a significant increase in the preload for any applied torque, without significantly increasing the manufacturing cost of the screw. Because of the increased preload, the stability of the implant system is significantly improved which, in turn, should increase the useful life of the implant system and resistance to fatigue failure.

## BRIEF DESCRIPTION OF THE DRAWINGS

FIG. 1 is a side elevation, partially in section, of a dental implant abutment system embodying the invention.
FIG. 2 is an exploded view of the assembly shown in FIG. 1.
FIG. 3 is a side elevation, partially in section, of a second dental implant abutment system embodying the invention.
FIG. 4 is an exploded view of the assembly shown in FIG. 3.
FIG. 5 is a plan view taken along line 5-5 in FIG. 4.
FIG. 6 is a side elevation, partially in section, of a third dental implant abutment system embodying the invention.
FIG. 7 is an exploded view of the assembly shown in FIG. 6.
FIG. 8 is a plan view taken along line 8-8 in FIG. 7.
FIG. 9 is a side elevation, partially in section, of a fourth dental implant abutment system embodying the invention.
FIG. 10 is an exploded view of the assembly shown in FIG. 9.
FIG. 11 is a plan view taken along line 11-11 in FIG. 10.

## DESCRIPTION OF ILLUSTRATIVE EMBODIMENTS

When an artificial tooth is employed in chewing food, the forces exerted on the tooth are not all aligned with the vertical axis on which the tooth was assembled. Forces are applied at various angles off the vertical axis, producing corresponding stresses on the screw or screws which hold the implant system together. If the applied force exceeds the strength of a screw, the screw can bend and open a microgap where the implanted root meets the abutment or the abutment meets the tooth. Repeated bending of the screw can lead to breakage. Also, fluids from the mouth may enter the microgap and lead to infection.

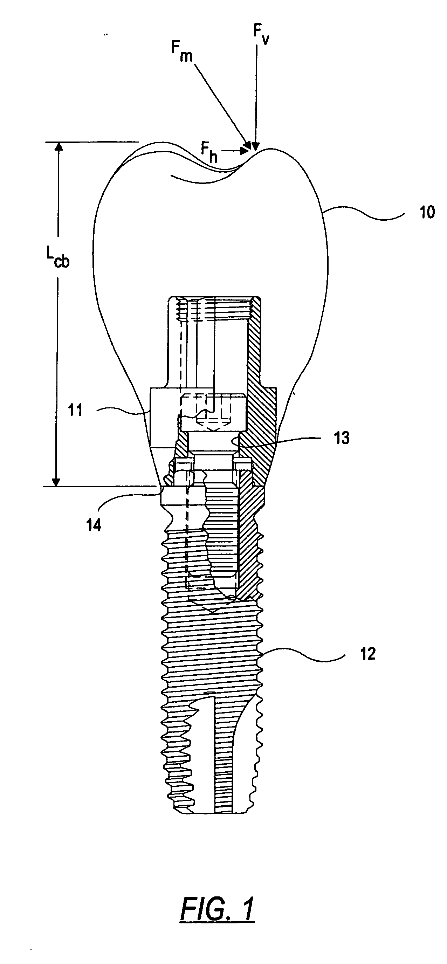

The potential problems may be illustrated by considering the implant system shown in FIG. 1, which illustrates an artificial tooth 10 formed on an abutment 11 and secured to an implanted root 12 by means of a screw 13. The threaded portion of the screw 13 engages corresponding threads in a bore inside the implanted root 12. When the screw 13 is tightened, it is placed under tension by applying a predetermined drive torque to the screw. As described above, this produces a preload on the screw.

When the forces exerted in mastication exceed the preload on the screw, the screw will bend under stress and allow a microgap to open. In FIG. 1, such a gap could open at the junction 14 where the abutment 11 meets the top of the implanted root 12. FIG. 1 illustrates an off-axis mastication force $F_m$ exerted on the tooth, and shows that this force may be resolved into a vertical force component $F_v$ and a horizontal force component $F_h$. The bending force exerted on the screw 13 at the junction 14 may be expressed as

$$(F_h)(L_{cb})$$

where $L_{cb}$ is the distance from the top of the tooth to the junction 14.

The resisting force $F_s$ exerted by the pretensioning of the screw 13 may be expressed as

$$(F_s)(W/2)$$

where W is the minor diameter of the threaded portion of the root 12. If the two forces $F_h$ and $F_s$ are equal so that the screw begins to bend, then

$$(F_s)(W/2) = (F_h)(L_{cb})$$

and

$$F_s = (F_h)(L_{cb})/ (W/2).$$

From this equation, it can be concluded that increasing the resisting force $F_s$ by greater pretensioning of the screw 13 will permit a higher mastication force $F_m$ to be exerted on the tooth before the screw 13 bends and opens a microgap.

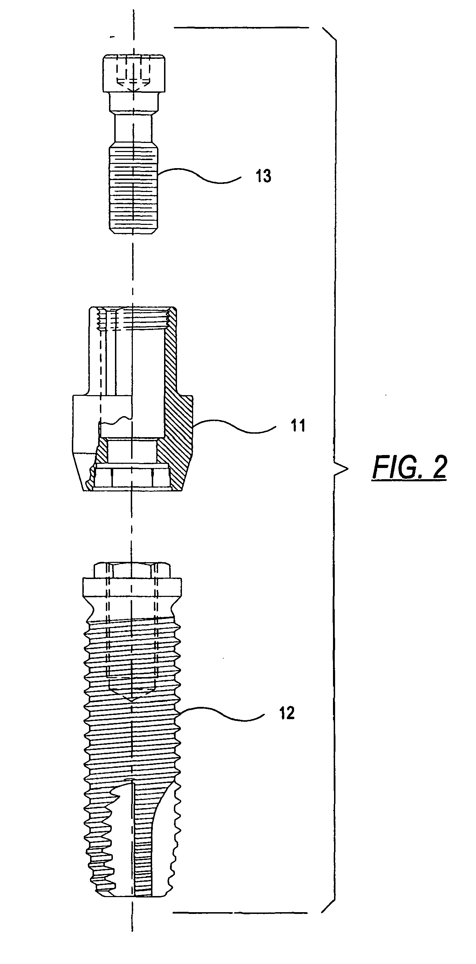

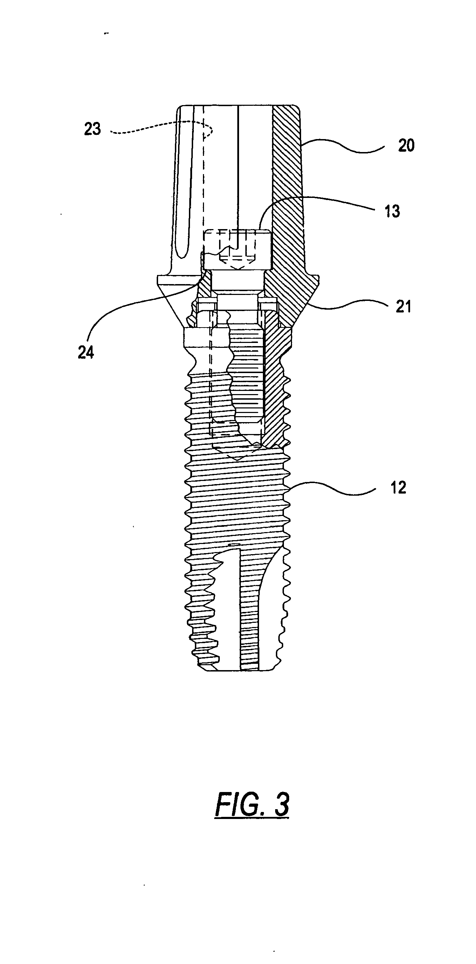

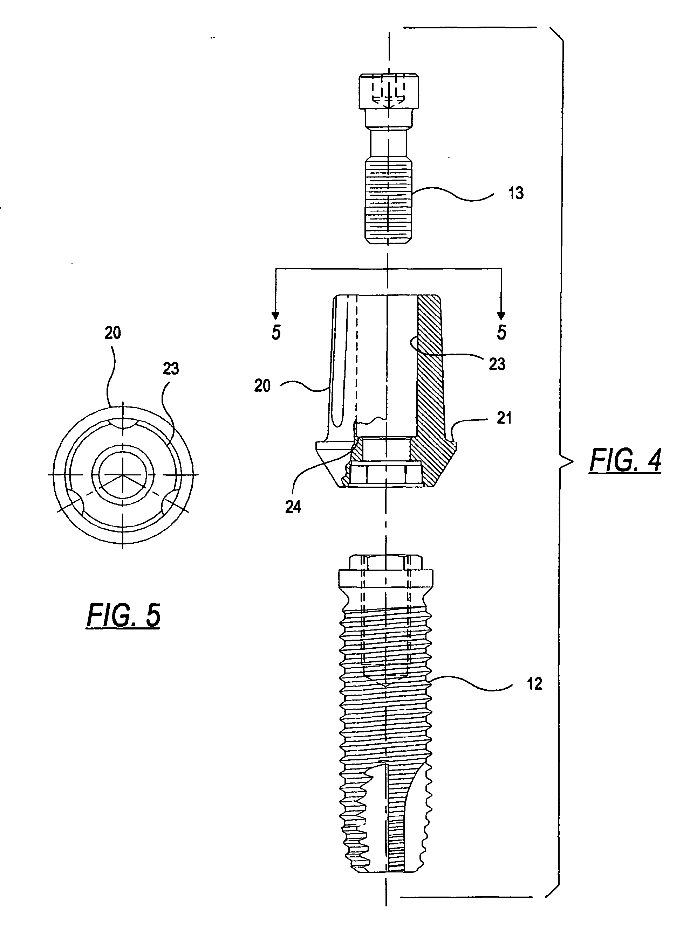

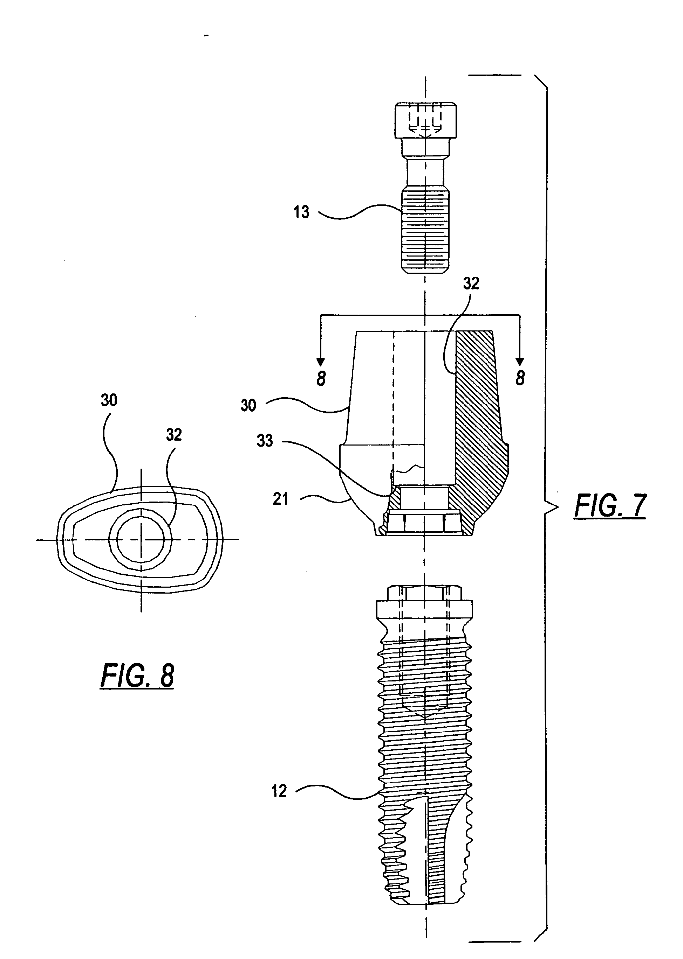

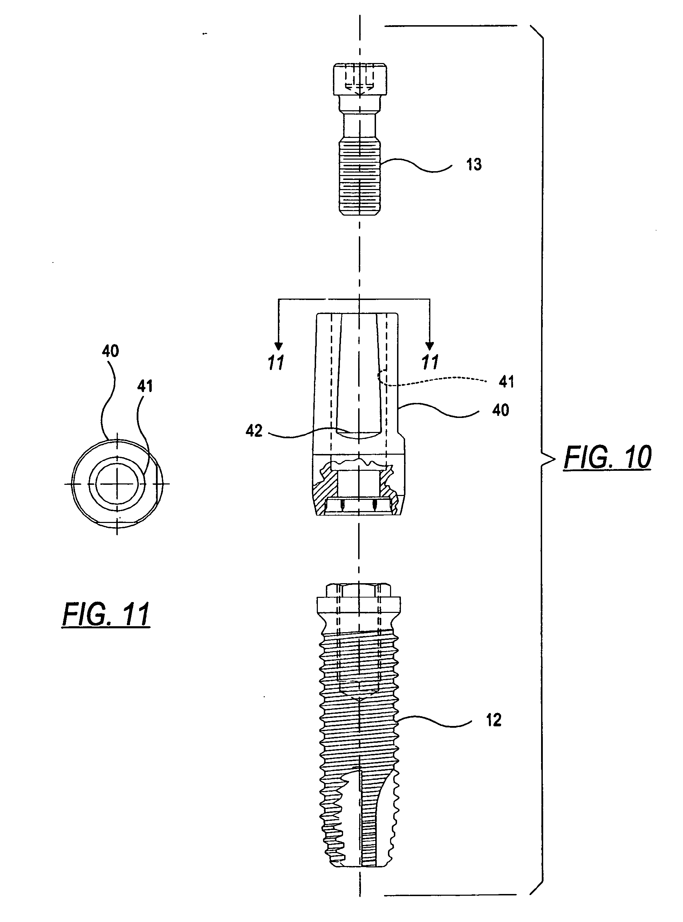

The particular abutment 11 illustrated in FIGS. 1 and 2 is intended for use in single-tooth applications. FIGS. 3-11 illustrate the use of the same implant or artificial root 12 and screw 13 with three different abutments 20, 30 and 40. The abutment 30 illustrated in FIGS. 3-5 is a healing abutment having a widely flared transmucosal section 21. This abutment forms a central passageway 23 and shoulder 24 for passing the screw 13 and seating the head of the screw inside the abutment.

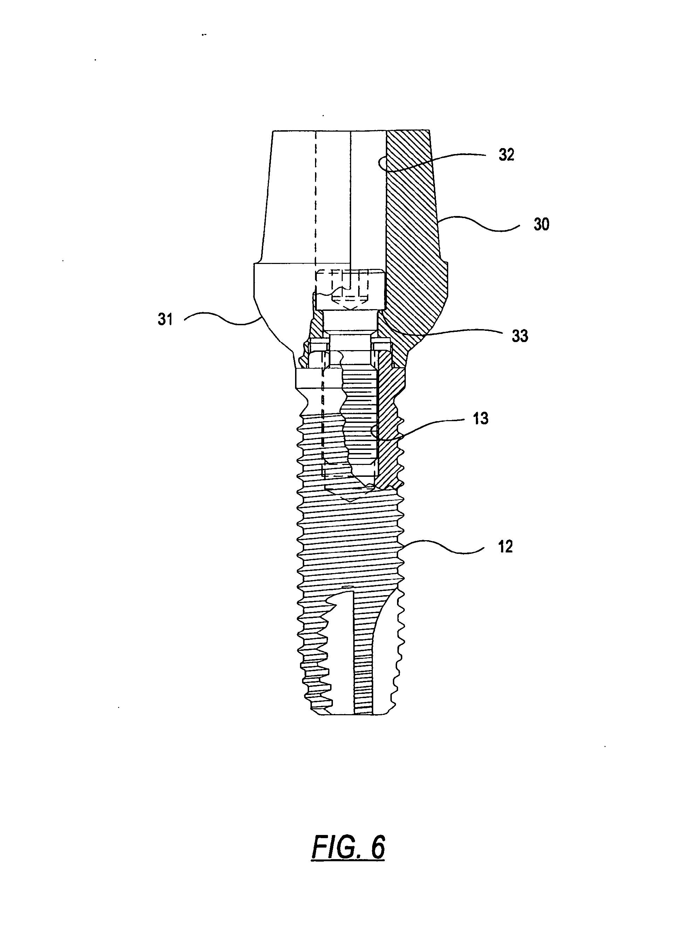

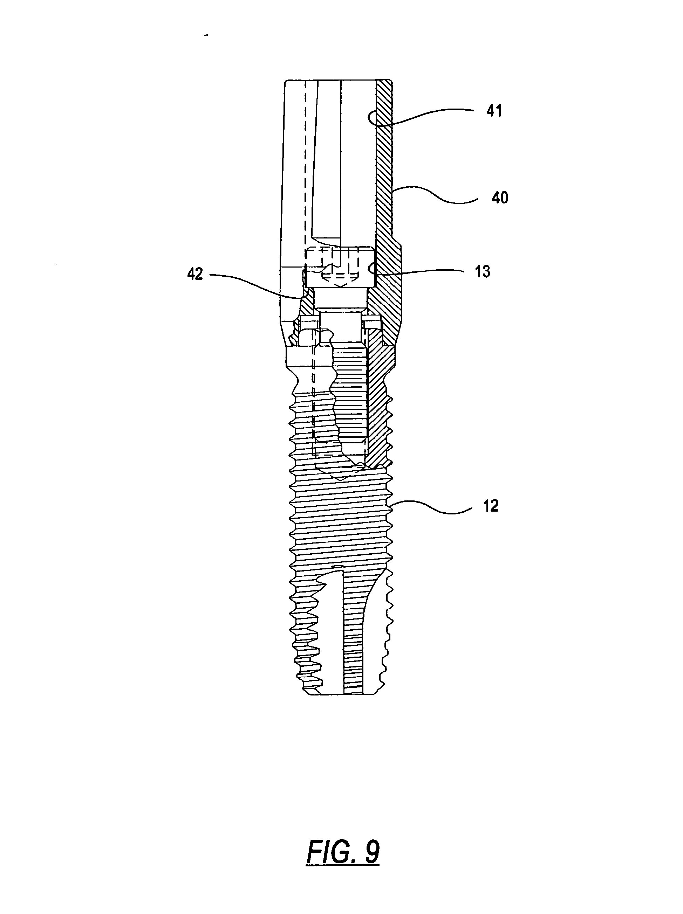

The abutment 30 shown in FIGS. 6-8 is another healing abutment having a differently shaped transmucosal section 31. Again, the central portion of the abutment 30 forms a longitudinal passageway 32 for receiving the screw 13, and a shoulder 33 for seating the head of the screw 13 within the abutment. As can be seen in FIG. 8, the abutment 30 has a nonround cross-section to approximate the shape of the tooth being restored.

FIGS. 9-11 illustrate a standard abutment known in the industry as the "UCLA" abutment 40, which forms an internal passageway 41 for passing the screw 13, and a shoulder 42 for seating the head of the screw 13 inside the abutment.

Screws used to assemble dental implant systems are typically tightened with a predetermined torque which is great enough to produce a substantial preload on the screw, but not so great as to risk fracturing the metal. This applied torque must overcome the frictional forces associated with the thread engagement and with turning the screw head against its seating surface, and must also tension the body of the screw.

As discussed above, the screws used in assembling dental implants are very small, and the loads which can applied to them are limited. While they are generally sufficient for dental implants to provide satisfactory service, it would be desirable to be able to apply even greater torque so as to minimize the possibility of opening microgaps during mastication. Stronger screws would be desirable, but the strength of screws is determined primarily by the metal used, and not all metals are biocompatible and acceptable for dental use. In general, if a metal or alloy is biocompatible and has sufficient strength, it may be used to make screws for dental implant systems. Palladium alloys having sufficient strength may be used, such as palladium alloy 8010 (palladium containing 9.5-10.5% gallium, 6.5-7.5% copper, and 1.8-2.2% gold with traces of zinc, iridium, and ruthenium). Another commonly used metal is titanium, for example, as its alloys Ti Al$_6$ V$_4$ (titanium containing 6% aluminum and 4% vanadium) and Ti 1313 (titanium containing 13% zirconium and 13% niobium). Platinum alloys containing iridium may also have application as dental implant screws.

Both the artificial roots and the abutments used in dental implant systems are typically made of titanium or a titanium alloy. The present invention reduces the problems associated with the screws presently used in such systems and makes it possible to apply higher preloads to the screws. The result is an improved implant assembly which is more stable, e.g., more resistant to the opening of microgaps and the associated problems and has increased resistance to fatigue failure.

The screws used in this invention are necessarily the same size as the screws which they replace. With the gold plating, however, a greater portion of the torque applied to the screw during assembly is applied to pretensioning the body of the screw and less to overcoming frictional forces. This increased pretensioning increases the force required to open a microgap in a dental implant system using the gold-plated screw, reduces the size of the microgap opened by forces between the threshold level at which a gap is initially opened and the fracture level, and increases the fatigue strength of the screw. This improvement is made possible by coating the screws, preferably by electroplating, with a thin layer of gold. The gold coating is believed to act as a lubricant or anti-gauling agent so that the torque which is applied places a greater tensile stress on the screw body. In addition, the gold provides improved corrosion resistance.

The screw threads may be machined or the metal stock may be roll threaded. After being threaded, the screws are coated with substantially pure gold. The thickness of the gold is limited by the space between the threads and, consequently, should be quite thin, typically 0.5-1 $\mu$m. Since the metal threads will have an inherent surface roughness, the gold plating should be sufficient to significantly reduce the frictional forces resulting from the surface roughness.

The gold plating may be applied to screws made of any of the standard alloys used in dental implant systems. The screw may be plated with an intermediate material such as platinum, nickel or copper before it is plated with gold to improve bonding of the gold to the alloy. For example, an intermediate "strike" of a biocompatible material such as platinum may be applied to cause the gold plating to become more permanently bonded to the alloy.

## Example 1

An experiment was conducted to simulate the reaction of a dental implant abutment assembly to forces imposed on it. In this experiment, screws machined from an 8010 palladium alloy were used to fasten an abutment to a dental implant. Some of the screws were used as made ("8010"), while others were plated with gold to a thickness of 0.5-1$\mu$m ("8010PL"). The screws were driven until initial contact was made by the screw head with the seating surface. Then the screws were tightened with applied torques of 45, 38 and 32 Newton-centimeters (N-cm) to preload the screws. Using a 360° template placed around the implant, the angle through which each screw was turned by the applied torque, after initial contact with the seating surface, was measured and recorded. The off-axis forces (in Newtons) required to open microgaps of 0.00635 mm (0.25 mil) were also recorded.

A compressive force was applied to the abutment at an angle of 30° from the central axis of the abutment and the implant to simulate an off-axis force imposed on the screw during mastication, as discussed above. The compressive force was applied by placing the implant/abutment assembly in a standard tensile/compression test apparatus at a 30° angle to the vertical axis. An optical micro camera was aimed at the junction between the abutment and the implant so that the width of any microgap at that junction could be measured, at a 350X magnification. The applied force was gradually increased until a 0.00635 mm (0.25 mil) microgap was opened. The magnitude of the applied force was recorded when the microgap reached 0.00635 mm (0.25 mil).

The fatigue strength of the screws was measured in a similar manner. A titanium implant was anchored in simulated bone material, and a titanium alloy (Ti Al$_6$ V$_4$) abutment simulating a large molar 17 mm high was mounted on the implant with an abutment screw. The resulting assembly simulates a single tooth replacement. It is fixed to the base of a compression testing apparatus at a 30° angle from the vertical. A stainless steel probe contacts the top of the abutment and places a vertical load to simulate the forces of mastication experienced by a tooth. A predetermined load is applied which cycles between 10-100% of the maximum load. The data presented below gives the maximum load which could be applied for five million cycles without failure.

The results are shown in Table A.

### TABLE A

| | Angle of Turn, Gap and Fatigue at Various Drive Torques | | | | | |
|---|---|---|---|---|---|---|
| | No Plating 80/10 UCLA | | | Gold-Plated 80/10 UCLA | | |
| Drive Torque | Turn Angle | 30° Gap Pry Load | Fatigue Strength | Turn Angle | 30° Gap Pry Load | Fatigue Strength |
| 32 N cm | 19° | 240 N | 275 N* | 28° | 345 N | 325 N* |
| 38 N cm | 23° | 290 N | | 36° | 390 N | |
| 45 N cm | 25° | 310 N | | 40° | 411 N | |
| *No failure after 5 million cycles. | | | | | | |

As can be seen from the above data, any given torque turned the plated screws through a greater angle than the unplated screws. The greater angular displacement produced a greater preload or tension in the plated screws, as evidenced by the fact that a greater off-axis force was required to open the microgap. This means that the gold-plated screws will resist greater masticating loads than the conventional unplated screws. Compare, for example, the data for the two screws which were tightened with a torque of 45 N-cm. The difference in the loads which the screws could accept before a 0.00635 mm (0.25 mil) microgap was opened was 101 N, or an improvement of more than 30%. Thus, the plated screw permits the attainment of a more stable implant system. The greater the tension in the abutment screw, the greater the resistance to gapping. Restricted gapping is directly related to increased fatigue strength and reduced screw loosening. Fatigue failure and screw loosening are a function of cyclical loading experienced during mastication.

**EP 0 923 352 B1**

**Claims**

1. A dental implant system comprising an artificial root and an abutment fastened together by a screw having a body made of a biocompatible material and a coating of gold on said body, thereby making possible an increased tensioning of said screw compared to the same screw without said coating.

2. The dental implant system of Claim 1, wherein said biocompatible material is palladium alloy.

3. The dental implant system of Claim 1, wherein said biocompatible material is palladium alloy 8010.

4. The dental implant system of Claim 1, wherein said coating is substantially pure gold.

5. The dental implant system of Claim 1, wherein said coating is electroplated on said body.

6. The dental implant system of Claim 5, wherein an intermediate strike coating is plated on said body.

7. The dental implant system of Claim 1, wherein said coating has a thickness in the range of from about 0.5 to about 1 $\mu$m.

8. Method of assembling components of dental implants wherein a first component is placed in contact with a second component and said components are fastened together by a screw passing through said first component and engaging a threaded portion of said second component, the improvement comprising selecting as said screw, metal biocompatible and acceptable for dental use and coated with gold, thereby increasing the available tensioning of said screw relative to screws having no gold or gold alloy coating.

9. The method of claim 8, further comprising tightening said screw to preload said screw.

10. The method of Claim 9, wherein said screw is tightened to a preselected torque.

11. The method of Claim 8, wherein said screw is of palladium alloy.

12. The method of Claim 11, wherein said screw is palladium alloy 8010.

**Patentansprüche**

1. Zahnimplantatsystem, das eine künstliche Wurzel und einen Stützsockel umfasst, die durch eine Schraube aneinander befestigt sind, die einen Körper, der aus biokompatiblem Material besteht, und einen Überzug aus Gold auf dem Körper hat, so dass, verglichen mit der gleichen Schraube ohne den Überzug, ein verstärktes Spannen der Schraube möglich ist.

2. Zahnimplantatsystem nach Anspruch 1, wobei das biokompatible Material Palladiumlegierung ist.

3. Zahnimplantatsystem nach Anspruch 1, wobei das biokompatible Material Palladiumlegierung 8010 ist.

4. Zahnimplantatsystem nach Anspruch 1, wobei der Überzug im Wesentlichen reines Gold ist.

5. Zahnimplantatsystem nach Anspruch 1, wobei der Überzug auf den Körper galvanisiert wird.

6. Zahnimplantatsystem nach Anspruch 5, wobei ein Vorgalvanisierungsüberzug auf den Körper galvanisiert wird.

7. Zahnimplantatsystem nach Anspruch 1, wobei der Überzug eine Dicke im Bereich von ungefähr 0,5 bis ungefähr 1 $\mu$m hat.

8. Verfahren zum Zusammensetzen von Komponenten von Zahnimplantaten, bei dem eine erste Komponente mit einer zweiten Komponente in Kontakt gebracht wird und die Komponenten durch eine Schraube aneinander befestigt werden, die durch die erste Komponente hindurchtritt und mit einem Gewindeabschnitt der zweiten Komponente in Eingriff kommt, wobei die Verbesserung das Auswählen von Metall als die Schraube umfasst, das biokompatibel und für den zahnmedizinischen Gebrauch akzeptabel sowie mit Gold überzogen ist, so dass das mögliche Spannen der Schraube gegenüber Schrauben ohne Gold- oder Goldlegierungsüberzug verstärkt wird.

**9.** Verfahren nach Anspruch 8, das des Weiteren Anziehen der Schraube zum Vorspannen der Schraube umfasst.

**10.** Verfahren nach Anspruch 9, wobei die Schraube auf ein vorgewähltes Drehmoment angezogen wird.

**11.** Verfahren nach Anspruch 8, wobei die Schraube aus Palladiumlegierung besteht.

**12.** Verfahren nach Anspruch 11, wobei die Schraube Palladiumlegierung 8010 ist.


**Revendications**

**1.** Système d'implant dentaire comportant une racine artificielle et un pilier fixées l'une à l'autre par une vis ayant un corps formé d'une matière biocompatible et un revêtement d'or sur ledit corps, rendant ainsi possible un tensionage accru de ladite vis en comparaison avec la même vis sans ledit revêtement.

**2.** Système d'implant dentaire selon la revendication 1, dans lequel ladite matière biocompatible est un alliage de palladium.

**3.** Système d'implant dentaire selon la revendication 1, dans lequel ladite matière biocompatible est un alliage de palladium 8010.

**4.** Système d'implant dentaire selon la revendication 1, dans lequel ledit revêtement est de l'or sensiblement pur.

**5.** Système d'implant dentaire selon la revendication 1, dans lequel ledit revêtement est électrodéposé sur ledit corps.

**6.** Système d'implant dentaire selon la revendication 5, dans lequel un revêtement de frappe intermédiaire est déposé sur ledit corps.

**7.** Système d'implant dentaire selon la revendication 1, dans lequel ledit revêtement a une épaisseur dans la plage d'environ 0,5 à environ 1 $\mu$m.

**8.** Procédé d'assemblage de constituants d'implants dentaires dans lequel un premier constituant est placé en contact avec un second constituant et lesdits constituants sont fixés l'un à l'autre par une vis passant à travers ledit premier constituant et engageant une partie filetée dudit second constituant, le perfectionnement comprenant le fait de choisir, en tant que ladite vis, un métal biocompatible et acceptable pour un usage dentaire et revêtu d'or, augmentant ainsi le tensionage disponible de ladite vis par rapport à des vis n'ayant pas de revêtement d'or ou d'alliage d'or.

**9.** Procédé selon la revendication 8, comprenant en outre le serrage de ladite vis pour précharger ladite vis.

**10.** Procédé selon la revendication 9, dans lequel ladite vis est serrée à un couple préalablement choisi.

**11.** Procédé selon la revendication 8, dans lequel ladite vis est en alliage de palladium.

**12.** Procédé selon la revendication 11, dans lequel ladite vis est en alliage de palladium 8010.

_FIG. 1_

8

13

11

12

_FIG. 2_

**_FIG. 3_**

FIG. 5

FIG. 4

_FIG. 6_

*FIG. 7*

*FIG. 8*

_FIG. 9_

13

40
41

42    41
      40

11    11

12

FIG. 11

_FIG. 10_